**Europäisches Patentamt**

**European Patent Office**

**Office européen des brevets**

(19)

(11) Veröffentlichungsnummer: **0 293 853**
**A1**

(12) **EUROPÄISCHE PATENTANMELDUNG**

(21) Anmeldenummer: **88108760.5**

(22) Anmeldetag: **01.06.88**

(51) Int. Cl.⁴: **G05D 23/24**

(30) Priorität: **05.06.87 DE 3718809**

(43) Veröffentlichungstag der Anmeldung:
**07.12.88 Patentblatt 88/49**

(84) Benannte Vertragsstaaten:
**AT BE CH DE ES FR GB GR IT LI LU NL SE**

(71) Anmelder: **MEMMERT GMBH & CO KG,**
**wärme-, medizin- und labortechnische**
**Elektro-Geräte**
**Äussere Rittersbacher Strasse 38**
**D-8540 Schwabach(DE)**

(72) Erfinder: **Haarmann, Peter**
**Amselstr. 29**
**D-8541 Kammerstein(DE)**
Erfinder: **Kusebauch, Heinz**
**Hembacherstr. 21**
**D 8540 Rednitzhembach(DE)**

(74) Vertreter: **Tergau, Enno et al**
**Patentanwälte Tergau & Pohl Postfach 11 93**
**47 Hefnersplatz 3**
**D-8500 Nürnberg 11(DE)**

(54) **Verfahren zur Temperaturregelung und Temperaturregelschaltung.**

(57) Die Erfindung betrifft ein Verfahren zur Temperaturregelung und eine Temperaturregelschaltung. In einem Meßwert-Erfassungsteil (2) wird eine für die Ist-Temperatur repräsentative Meßspannung $(U_{TH})$ erzeugt. In einem Einstellteil (1) wird eine für die Soll-Temperatur repräsentative Soll-Spannung $(U_S)$ erzeugt. Ein Differenzbildner (Umkehraddierer 5) ermittelt aus Meß- $(U_{TH})$ und Soll-Spannung $(U_S)$ eine der Regelabweichung von Soll- zu Ist-Temperatur entsprechende Regelabweichungsspannung $(U_D)$. In Abhängigkeit der Regelabweichungsspannung $(U_D)$ wird die Heizleistung der Heizung (14) der Temperaturregelschaltung mittels Phasenanschnittsteuerung durch Verschiebung des Phasenanschnittwinkels $(\vartheta)$ proportional geregelt. Jeweils während einer jeden Netzhalbwelle (27) wird die Regelabweichungsspannung $(U_D)$ in einem Komparator (Vergleicher 11) mit der Absteigsflankenspannung einer netzsynchronen Dreieckspannung $(U_{DS})$ verglichen. Ab dem Zeitpunkt der Gleichheit dieser beiden Spannungen $(U_D$ bzw. $U_{DS})$ erzeugt der Komparator (Vergleicher 11) ein Ausgangssignal, daß die Lage des Phasenanschnittwinkels $(\vartheta)$ steuert.

FIG. 1

EP 0 293 853 A1

## Verfahren zur Temperaturregelung und Temperaturregelschaltung

Die Erfindung betrifft ein Verfahren zur Temperaturregelung insbesondere in Wärme-, Brutschränken, Sterilisatoren oder Wärmebädern mit den im Oberbegriff des Anspruches 1 angegebenen Verfahrensschritten.

Ein bekanntes und wegen der schaltungstechnisch einfachen Realisierungsmöglichkeiten oftmals angewendetes Verfahren zur Temperaturregelung in einem begrenzten Raum (Regelstrecke) ist das sogenannte Zweipunktverfahren, bei dem die Stellgröße in Form einer 0-1-Funktion dem Regelkreis zugeführt wird: In einem Temperaturregelkreis wird solange mit voller Leistung geheizt, bis die Solltemperatur erreicht ist. Dann wird die Heizung abgeschaltet. Durch die verbleibende Restwärme des Heizsystems wird die Regelstrecke jedoch über die Solltemperatur aufgeheizt, die Regelgröße schwingt also über. Nach Unterschreiten der Solltemperatur wird die volle Heizleistung wieder eingeschaltet, bis die Solltemperatur von neuem erreicht ist. Die Zweipunkt-geregelte Ist-Temperatur schwankt also in einem relativ weiten Bereich um die Solltemperatur.

MUß die Solltemperatur aus anwendungstechnischen Gründen genauer geregelt werden, so sind aufwendigere Regler - beispielsweise Proportional- oder Proportional-Integral-Differential-Regler - zu verwenden.

Bei einem elektronischen Proportional-Regler (P-Regler) zur Temperaturregelung wird in einem Meßwert-Erfassungs teil eine für die Ist-Temperatur repräsentative Meßspannung und in einem Einstellteil eine der Solltemperatur repräsentative Soll-Spannung erzeugt. Ein Differenzbildner ermittelt aus der Meß- und Sollspannung eine der Regelabweichung von Soll- zu Ist-Temperatur entsprechende Regelabweichungsspannung. Letztere dient als Maß für die in das zu regelnde System einzuspeisende Heizleistung. Die Heizleistung ist also proportional zur Regelabweichung. Insbesondere bei der Temperaturregelung eines Systems auf einem Temperaturniveau über Raumtemperatur muß dem zur Regelabweichung proportionalen Anteil der Heizleistung ein im wesentlichen konstanter, vom Absolutbetrag der Solltemperatur abhängiger Anteil untergelegt werden. Im wesentlichen handelt es sich dabei um den sogenannten Integral-Anteil bei einem Proportional-Integral-Regler.

Die zur Regelabweichung proportionale Regelung der Heizleistung erfolgt bei netzspannungsversorgten Heizungen in der Regel durch Phasenanschnittsteuerung. Dies bedeutet, daß der Phasenanschnittwinkel entsprechend der Regelabweichung eingestellt wird.

Der Erfindung liegt die Aufgabe zugrunde, ein Verfahren zur Temperaturregelung anzugeben, bei dem die Einstellung des Phasenanschnittwinkels entsprechend der Regelabweichung auf besonders einfache Weise realisierbar ist.

Die Lösung dieser Aufgabe ist im Kennzeichen des Anspruches 1 angegeben. Demnach wird während einer jeden Netzhalbwelle die Regelabweichungsspannung in einem Komparator mit der Abstiegsflankenspannung einer netzsynchronen Dreieckspannung verglichen. Ab dem Zeitpunkt der Gleichheit dieser beiden Spannungen erzeugt der Komparator ein Ausgangssignal, das die Winkellage des Phasenanschnittes steuert. Die Steuerung erfolgt durch eine bekannte Ansteuerschaltung für den Triac der Phasenanschnittsteuerung. Trotz der Einfachheit der Schaltung ist gegenüber Zweipunktreglern ein erheblich verbessertes Regelverhalten erzielbar. Ein weiterer Vorteil des erfindungsgemäßen Verfahrens liegt darin, daß der Proportionalregelanteil durch das Verhältnis der maximalen Amplitude der Dreiecksspannung zum Betrag der Regelabweichungsspannung und durch die Steilheit der Abstiegsflanke der Dreiecksspannung variierbar ist.

Durch die Weiterbildung des erfindungsgemäßen Verfahrens nach Anspruch 2 ist es möglich, den proportionalen Regelanteil mit sich ändernder Regelabweichung ebenfalls zu variieren. Dadurch kann der Regler auf verfahrenstechnisch einfache Weise in seinem Regelverhalten optimiert werden, d.h. er kann so eingestellt werden, daß einerseits das Überschwingen der Regelgröße stark reduziert, andererseits der Sollwert schnell erreicht wird.

Nach Anspruch 3 kann unterhalb eines einstellbaren Schwellenwerts der Regelabweichungsspannung - also bei Erreichen einer bestimmten Regelabweichung von Ist- zu Solltemperatur - die Dreieckspannung in ihrem Abstiegsflankenbereich derart variiert werden, daß sie einen zeitlichen Verlauf mit bis zu einer Grenzspannung großem Spannungsabfall pro Zeiteinheit und anschließend kleinem Spannungsabfall pro Zeiteinheit aufweist. Dadurch kann die Winkellage des Phasenanschnittwinkels bei Annäherung der Ist- an die Solltemperatur in Richtung 0° nach vorne verschoben werden, was bedeutet, daß der Regelstrecke ein gegenüber dem normalen Proportionalregelanteil erhöhter Anteil der Heizleistung zugeführt wird. Praktisch wird dadurch dem Proportionalregelanteil ein Integral-Anteil hinzugefügt, der sicherstellt, daß die an sich bei einem Proportionalregler immer vorhandene Proportionalregelabweichung nahezu zu Null gemacht und das Solltemperaturniveau eingehalten wird. Beim erfindungsgemäßen Verfahren geschieht dies auf einfache Weise durch Variation der Dreieckspannung in ihrem Abstiegsflankenbereich.

Durch die Einstellbarkeit des Wertes der vorstehend angegebenen Grenzspannung kann der Integralanteil variiert und damit der Regler auf verfahrenstechnisch einfache Weise optimiert werden (Anspruch 4).

In den Ansprüchen 5 bis 10 sind eine Temperaturregelschaltung und vorteilhafte Weiterbildungen davon angegeben, die das erfindungsgemäße Regelverfahren anwenden.

Nach dem Kennzeichen des Anspruches 5 sind die Ausgänge des Differenzbildners zur Erzeugung der Regelabweichungsspannung und des Dreiecksspannungsgenerators elektrisch mit den Eingängen eines Komparators verbunden, der bei Gleichheit von Dreieckspannung und Regelabweichungsspannung ein Ausgangssignal zur Steuerung der Phasenanschnittsteuerung der Heizung erzeugt. Die Regelschaltung ist demnach sehr einfach aufgebaut.

In Anspruch 6 ist die schaltungstechnische Realisation des Generators für die netzsynchrone, im Abstiegsflankenbereich variierbare Dreieckspannung beschrieben. Demnach besteht dieser in an sich bekannter Weise im wesentlichen aus einem Kondensator, der beim Nulldurchgang der Netzhalbwelle mit kurzer Zeitkonstante aufladbar und während der verbleibenden Netzhalbperiode über eine Entladungsschaltung mit mittlerer Zeitkonstante bzw. nach Erreichen des Schwellenwertes der Regelabweichungsspannung bis zum Erreichen der Grenzspannung mit kurzer Zeitkonstante und danach mit langer Zeitkonstante entladbar ist. Nach Anspruch 7 besteht die Entladungsschaltung dabei aus einer Logikschaltung und einem von dieser beschaltbaren Widerstandsnetzwerk. Die Logikschaltung ist dabei aus zwei Komparatoren und einem UND-Gatter mit der im Anspruch 8 angegebenen Schaltungsverknüpfung aufgebaut.

Durch den im Anspruch 9 angegebenen Aufbau des Widerstandsnetzwerkes kann das variable Abstiegsflankenverhalten des Dreieckspannungsgenerators durch lediglich zwei elektronische Schalter realisiert werden.

Zusammenfassend kann mittels des erfindungsgemäßen Temperaturregelungsverfahrens die Regelschaltung in einer Weise ausgelegt werden, daß sie einfach und schnell so einstellbar ist, daß einerseits das Überschwingverhalten stark reduziert und andererseits der Sollwert schnell erreicht wird. Die Regelung wird stetig durchgeführt, wobei durch die Variation der Dreieckspannung in deren Abstiegsflankenbereich die Regelung in die Lage versetzt wird, dem zu regelnden System soviel Energie zuzuführen, wie für das schnelle Erreichen und Einhalten eines Temperatursollwertes notwendig ist.

Das erfinderische Verfahren und die erfindungsgemäße Regelschaltung wird anhand der beiliegenden Figuren in einem Ausführungsbeispiel näher erläutert. Es zeigen:

Fig. 1 ein Blockschaltbild der Temperaturregelschaltung,

Fig. 2 einen Schaltplan des Regelteils der Temperaturregelschaltung und

Fig. 3 und 4 verschiedene Zeit-Spannung-Diagramme zur Erläuterung des erfindungsgemäßen Regelverfahrens.

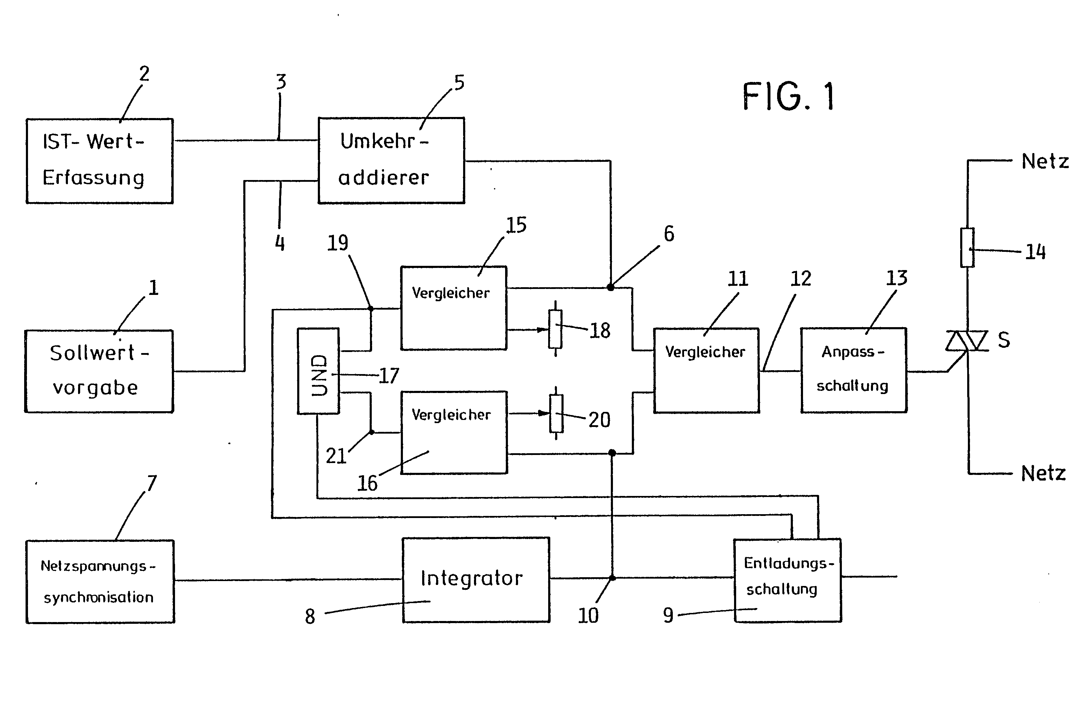

In Fig. 1 ist die Temperaturregelschaltung als Blockschaltbild dargestellt. Aufgabe der Regelschaltung ist die Temperaturregelung beispielsweise eines nicht dargestellten Wärmeschrankes auf eine vorzugebende Solltemperatur. Dazu wird in einem Einstellteil 1 eine für die Solltemperatur repräsentative Sollspannung $U_S$ erzeugt. Das Einstellteil besteht demnach im wesentlichen aus einer eine einstellbare Konstantspannung abgebenden Spannungsquelle.

Im Meßwerterfassungsteil 2 wird eine für die Ist-Temperatur repräsentative Meßspannung $U_{TH}$ erzeugt. Bekannterweise wird dazu beispielsweise ein temperaturempfindlicher Platin-Widerstand als Temperatursensor im Wärmeschrank verwendet. Der Platin-Widerstand wird von einem Konstantstrom durchflossen. Die am Widerstand abfallende Spannung ist für die im Wärmeschrank herrschende Temperatur repräsentativ. Im Meßwert-Erfassungsteil 2 sind übliche Spannungsverstärker und Zuleitungskompensatoren eingebaut. Am Ausgang des Meßwert-Erfassungsteils 2 kann letztendes eine zur Temperatur im Wärmeschrank proportionale Meßspannung $U_{TH}$ abgegriffen werden.

Zur Ermittlung der Regelabweichung zwischen Soll- und Ist-Temperatur werden die Meßspannung $U_{TH}$ bzw. die Sollspannung $U_S$ den Eingängen 3,4 des als Differenzbildner fungierenden Umkehraddierers 5 zugeführt.

Da die Sollspannung $U_S$ positiv und die Meßspannung $U_{TH}$ negativ ausgelegt sind, erfolgt die Differenzbildung zwischen diesen beiden Spannungen durch Addition. Am Ausgang bzw. Verzweigungspunkt 6 des Umkehraddierers 5 kann eine der Regelabweichung von Soll- zu Ist-Temperatur entsprechende, im Vorzeichen durch die Umkehraddition geänderte Regelabweichungsspannung $U_D$ abgegriffen werden.

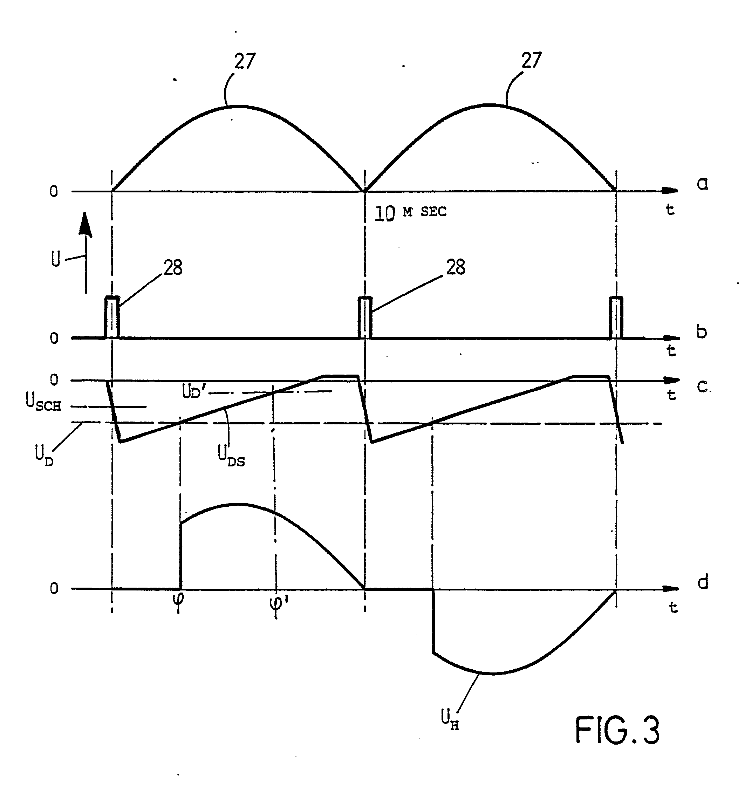

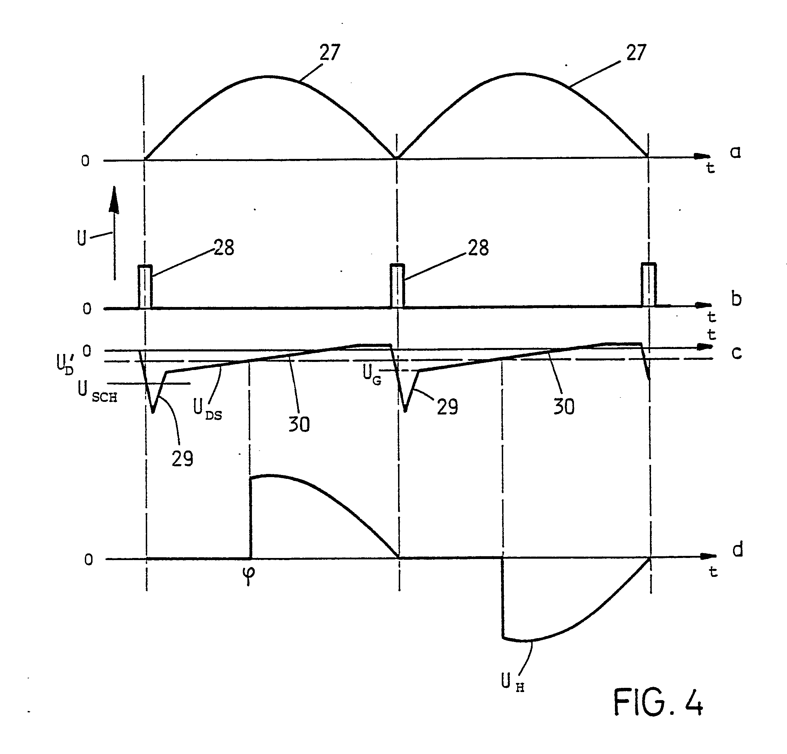

Ein weiterer wesentlicher Teil der erfindungsgemäßen Temperaturregelschaltung ist der Dreieckspannungsgenerator, der aus dem Netzspannungssynchronisationsteil 7, dem Integrator 8 und der Entladungsschaltung 9 zusammengesetzt ist. In das Netzspannungssynchronisationsteil 7 werden gleichgerichtete Netzhalbwellen 27 (Fig.3,4) eingespeist. Beim Nulldurchgang der Netzhalbwelle wird der Integrator 8 mit kurzer Zeitkonstante aufgeladen und anschließend über die Entladungsschaltung 9 entladen. Am Ausgang 10 des Integrators 8 wird eine negative, netzsynchrone Dreieckspannung $U_{DS}$ erzeugt.

Die bei einer Ist-Temperatur unterhalb der Solltemperatur im Betrag negative Regelabweichungsspannung $U_D$ und Dreieckspannung $U_{DS}$ werden dem Vergleicher 11 zugeführt. Dieser erzeugt an seinem Ausgang 12 solange kein Ausgangssignal für die Ansteuerschaltung 13, wie der Betrag der Dreieckspannung $U_{DS}$ in seinem Abstiegsflankenbereich größer ist als die Regelabweichungsspannung $U_D$. Wie anhand der Fig. 3 und 4 noch erläutert wird, wird dadurch über die Ansteuerschaltung 13 der Triac S der Phasenanschnittsteuerung für die netzversorgte Heizung 14 des Wärmeschrankes mit einem der Regelabweichung zwischen Soll- und Ist-Temperatur entsprechenden Phasenanschnittwinkel $\vartheta$ gezündet. Damit ist eine zur Regelabweichung proportionale Leistungsregelung der Heizung 14 realisiert.

Die Entladungsschaltung 9 und damit das Zeitverhalten der Dreieckspannung $U_{DS}$ im Abstiegsflankenbereich ist durch die aus den Vergleichern 15,16 und dem UND-Gatter 17 zusammengesetzte Logikschaltung beeinflußbar. Vom Verzweigungspunkt 6 ausgehend wird die Regelabweichungsspannung $U_D$ auf den einen Eingang des Vergleichers 15 geführt. Am zweiten Eingang dieses Vergleichers 15 liegt eine durch einen Spannungsteiler 18 einstellbare, negative Schwellenspannung $U_{SCH}$ an. Solange die Regelabweichungsspannung $U_D$ noch negativer ist als die Schwellenspannung $U_{SCH}$, wird vom Ausgang 19 des Vergleichers 15 derart ein Signal an die Entladungsschaltung 9 abgegeben, daß der Integrator 8 mit einer mittleren Zeitkonstante $\tau_M$ entladen wird.

Sobald die Regelabweichungsspannung $U_D$ betragsmäßig kleiner als die Schwellenspannung $U_{Sch}$ wird, ändert sich der Pegel am Ausgang 19 des Vergleichers 15, wodurch über das mit dem Ausgang 19 eingangsseitig verbundene UND-Gatter 17 die Entladungsschaltung 9 derart beeinflußt wird, daß der Integrator 8 mit einer kurzen Zeitkonstante $\tau_K$ entladen wird. Dieses Zeitverhalten wird jedoch nur solange aufrechterhalten, bis die Dreieckspannung $U_{DS}$ einen Wert erreicht, der der am Spannungsteiler 20 eingestellten Grenzspannung $U_G$ entspricht. Der Ausgang 10 des Integrators 8 ist nämlich zusätzlich mit dem einen Eingang des Vergleichers 16 verbunden, an dessen zweitem Eingang die negative Grenzspannung $U_G$ anliegt. Sobald die Dreieckspannung $U_{DS}$ die Grenzspannung $U_G$ erreicht hat, schaltet der Ausgang 21 des Vergleichers 16 um. Dieser Ausgang 21 ist mit dem zweiten Eingang des UND-Gatters 17 verbunden. Der mit der Entladungsschaltung 9 verbundene Ausgang des UND-Gatters 17 steuert bei diesem Zustand die Entladungsschaltung 9 derart, daß der Integrator 8 mit einer langen Zeitkonstante $\tau_L$ entladen wird. Wie anhand der Fig. 3 und 4 noch näher erläutert wird, wird durch diese Variation der Dreieckspannung $U_{DS}$ im Abstiegsflankenbereich über den Vergleicher 11 die Lage des Phasenanschnittwinkels des Triacs S im wesentlichen abhängig von der Regelabweichungsspannung $U_D$ so verändert, daß zusätzliche Heizenergie in den Wärmeschrank eingespeist wird.

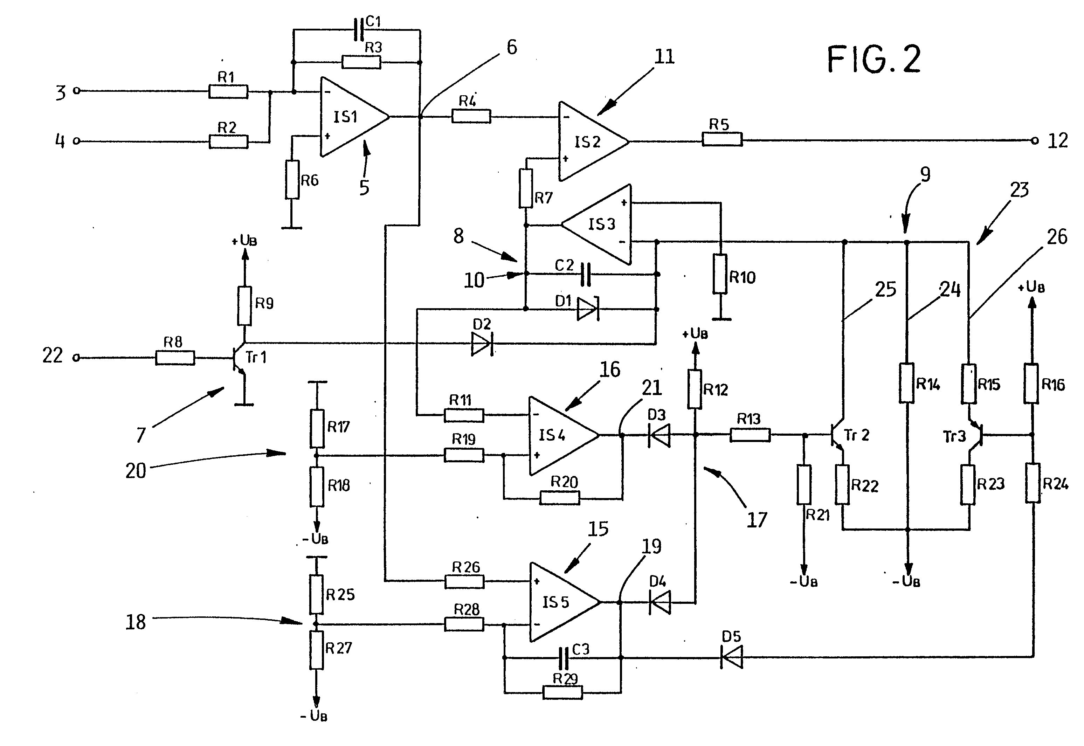

Anhand der Fig. 2 wird im folgenden der genaue Schaltungsaufbau erläutert. Der Umkehraddierer 5 ist im wesentlichen durch den Operationsverstärker IS1 realisiert, der zwischen seinem Ausgang und seinem invertierenden Eingang durch den Kondensator C1 und Widerstand R3 rückgekoppelt ist. Der nicht-invertierende Eingang ist über den Vorschaltwiderstand R6 mit dem Massepotential verbunden. Über die Eingänge 3 bzw. 4 werden über Vorschaltwiderstände R1,R2 die Meßspannung $U_{TH}$ bzw. Sollspannung $U_S$ auf den invertierenden Eingang des Operationsverstärkers IS1 gelegt. Es liegt also die Differenzspannung zwischen Meß- $U_{TH}$ und Sollspannung $U_S$ am Operationsverstärker IS1 an. Dessen Ausgangspegel repräsentiert die Regelabweichungsspannung $U_D$, die vom Verzweigungspunkt 6 ausgehend über den Vorschaltwiderstand R4 zum invertierenden Eingang des Operationsverstärkers IS2 gelegt wird. Der Operationsverstärker IS2 nimmt die Funktion des Vergleichers 11 gemäß Fig. 1 wahr.

Die Regelabweichungsspannung $U_D$ wird vom Verzweigungspunkt 6 ausgehend über den Vorschaltwiderstand R26 auf den nicht-invertierenden Eingang des Operations verstärkers IS5 gelegt, der die Funktion des Vergleichers 15 gemäß Fig. 1 wahrnimmt. Der Operationsverstärker IS5 ist zwischen seinem Ausgang und dem nicht-invertierenden Eingang mittels des Kondensators C3 und des parallel dazu liegenden Widerstandes R29 rückgekoppelt. Auf seinen invertierenden Eingang wird über einen Vorschaltwiderstand R28 die am Spannungsteiler 18 zwischen den beiden in Reihe zwischen Massepotential und der negativen Betriebsspannung -$U_B$ liegenden Widerständen R25,R27 abgegriffene Schwellenspannung $U_{SCH}$ gelegt.

Das Netzspannungssynchronisationsteil 7 ist aus dem Transistor TR1 mit seinem Basiswiderstand R8 und dem Kollektorwiderstand R9 zusammengesetzt. Am Basisanschluß 22 werden gleichgerichtete, positive Netzhalbwellen 27 (s. Fig. 3a, Fig. 4a) eingespeist. Der Transistor TR1 arbeitet als elektronischer Schalter, der im Nulldurchgang der Netzhalbwellen öffnet. Im Öffnungszustand des Transistors TR1 wird von der positiven Versorgungsspannung $U_B$ über den Widerstand R9 und die Diode D2 der Kondensator C2 mit der Ladezeitkonstante $\tau_{LD}$ = R9 x C2 aufgeladen. Der Kondensator C2 und parallel dazu geschaltet die Zener-Diode D1 bzw. der Operationsverstärker IS3 bilden im wesentlichen den Integrator 8 gemäß Fig. 1. Der nicht-invertierende Eingang des Operationsverstärkers IS3 liegt über den Vorschaltwiderstand R10 auf Massepotential. Die Zener-Diode D1 sorgt dafür, daß die Spannungshöhe am Kondensator C2 begrenzt ist.

Der Knotenpunkt von Ausgang des Operationsverstärkers IS3, negativ geladener Kondensatorplatte von C2 und Anode der Zener-Diode D1 stellt im wesentlichen den Ausgang 10 des Integrators 8 dar.

Die negative Dreiecksspannung $U_{DS}$ am Ausgang 10 des Integrators 8 wird über den Widerstand R7 an den nicht-invertierenden Eingang des Operationsverstärkers IS2 gelegt. Letzterer vergleicht also $U_{DS}$ mit der Regelabweichungsspannung $U_D$.

Der Kondensator C2 ist über das Widerstandsnetzwerk 23, das die Entladungsschaltung 9 nach Fig. 1 darstellt, entladbar. Es umfaßt drei gegen negative Betriebsspannung $-U_B$ geschaltete Parallelzweige 24,25,26 mit einem Widerstand R14 bzw. einem als elektronischer Schalter arbeitenden Transistor TR2 und in Reihe dazu einem Widerstand R22 bzw. einem als elektronischer Schalter arbeitenden Transistor TR3 und in Reihe den Widerständen R15,R23. Sind die beiden Transistoren TR2 und TR3 nichtleitend, als Schalter also geöffnet, so wird der Kondensator C2 mit einer langen Zeitkonstante $\tau_L$ = C2 x R14 entladen. Ist zum Parallelzweig 24 der Parallelzweig 25 mit dem Transistor TR2 und dem Widerstand R22 parallelgeschaltet, so wird der Kondensator C2 mit der kurzen Zeitkonstante $\tau_K$ = C2 x R22 x R14/(R22 + R14) entladen. Wird statt dem Parallelzweig 25 der Parallelzweig 26 zum Zweig 24 zugeschaltet, so wird der Kondensator C2 mit der mittleren Zeitkonstante $\tau_M$ = C2 x (R15 + R23) x R14/(R15 + R23 + R14) entladen.

Die Beschaltung der Transistoren TR2 und TR3 erfolgt über die im wesentlichen aus den Operationsverstärkern IS4 und IS5 bestehende Logik. Der invertierende Eingang des Operationsverstärkers IS4 ist über den Widerstand R11 mit dem Ausgang 10 des Integrators 8 - also mit der Negativpotentialseite des Kondensators C2 -verbunden. An seinem nicht-invertierenden, über den Widerstand R20 mit gekoppelten Eingang liegt über den Widerstand R19 die zwischen den beiden in Reihe gegen die negative Betriebsspannung $-U_B$ geschalteten Widerständen R17,R18 des Spannungsteilers 20 abgegriffene Grenzspannung $U_G$. Die in Sperrichtung den beiden Ausgängen der Operationsverstärker IS4 und IS5 nachgeschalteten, gemeinsam über den Widerstand R13 mit der Basis des Transistors TR2 verbundenen Dioden D3,D4 bilden zusammen mit dem Widerstand R12 das UND-Gatter 17 in bekannter Dioden-Transistor-Logik.

Anhand der Fig. 3 und 4 wird das Regelverhalten der Schaltung erläutert. Darin sind Zeit-Spannungs-Diagramme gezeigt, und zwar in Fig. 3a bzw. Fig. 4a die am Eingang (Basisanschluß 22 des Transistors TR1) des Netzspannungssynchronisationsteiles 7 eingespeisten, positiven Netzhalbwellen 27. Fig. 3b bzw. Fig. 4b zeigt die Ladespannung für den Kondensator C2, die beim Öffnen des Transistors TR1 am Kondensator C2 anliegt. Zu erkennen sind die kurzen, mit doppelter Netzfrequenz eingespeisten Spannungsimpulse 28.

In den Fig. 3c bzw. 4c ist mit einer durchgehenden Linie der Spannungsverlauf am Ausgang 10 des Integrators 8 und damit die am nicht-invertierenden Eingang des Operationsverstärkers IS2 eingespeiste, netzsynchrone Dreieckspannung $U_{DS}$ gezeigt. Die horizontale, strichlierte Linie stellt die momentane, über eine Halbwellenperiode im wesentlichen konstante Regelabweichungsspannung $U_D$ dar.

In den Fig. 3d bzw. 4d ist die durch Phasenanschnittsteuerung geregelte, an der Heizung 14 anliegende Heizspannung $U_H$ gezeigt.

Ist die Regelabweichungsspannung $U_D$ negativer als die Schwellenspannung $U_{SCH}$, so wird der Kondensator C2 entsprechend Fig. 3c mit der mittleren Zeitkonstante $\tau_M$ im Bereich seiner Abstiegsflanke entladen. In diesem Zustand wird nämlich der Transistor TR3 durch den Ausgang des Vergleichers 15 (Operationsverstärker IS5) geschlossen, während TR2 durch das UND-Gatter 17 geöffnet ist.

Solange die Ist-Temperatur noch weit unterhalb der Solltemperatur liegt, die Regelabweichungsspannung $U_D$ also negativer als der negative Maximalwert der Dreieckspannung $U_{DS}$ ist (in Fig. 3 ist dieser Zustand nicht dargestellt), bleibt der Ausgang des Vergleichers 11 (Operationsverstärker IS2) während der gesamten Halbwelle positiv. Über die bekannte Ansteuerschaltung 13 und dem Triac S wird die Netzspannung mit voller Leistung ohne Phasenanschnitt auf die Heizung 14 übertragen.

Mit zunehmender Annäherung der Ist- an die Solltemperatur wird ein Zustand erreicht, bei dem die Regelabweichungsspannung $U_D$ während eines Teils der Dreieckspannung $U_{DS}$ positiver als letztere wird (Fig.3o). In diesem Zustand verbleibt der Ausgang des Vergleichers 11 (Operationsverstärker IS2) im negativen Zustand, wodurch der Triac S sperrt und während dieses Teils der Netzhalbwelle der Heizung 14 keine Energie zugeführt wird. Sobald die Dreieckspannung $U_{DS}$ positiver als die Regelabweichungsspannung $U_D$ wird, schaltet der Vergleicher 11 in positiver Richtung um, durch die Ansteuerschaltung 13 wird der Triac S geschlossen, wodurch der Heizung 14 während der verbleibenden Halbwellenperiode Energie zugeführt wird (Fig.3c,d). Mit zunehmender Annäherung der Ist- an die Solltemperatur nähert sich die Regelabweichungsspannung $U_D$ an die Nullinie in Fig. 3c an (siehe $U_D'$). Der Phasenanschnittswinkel $\vartheta$ (Fig. 3d) verschiebt sich dadurch nach rechts ($\vartheta'$), d.h. die Netzhalbwelle zur Versorgung der Heizung 14 würde immer später eingeschaltet werden. Damit stünde der Heizung 14 nicht mehr genügend Energie zur Verfügung, um eine Annäherung der Isttemperatur an die Solltemperatur zu erreichen bzw. nach einem Überschwingen im Langzeitverhalten der Regelung die Einhaltung der Solltemperatur zu gewährleisten.

Daher wird die Dreieckspannung $U_{DS}$ gemäß Fig. 4c variiert. Sobald die Regelabweichungsspannung $U_D$ die Schwellenspannung $U_{SCH}$ überschreitet, wird der Ausgang des Vergleichers 15 (Operationsverstärker IS5) positiv und dadurch der Transistor TR3 geöffnet. Der Vergleicher 16 (Operationsverstärker IS4) vergleicht die am Spannungsteiler 20 eingestellte Grenzspannung $U_G$ mit der Dreieckspannung $U_{DS}$. Sein Ausgangssignal und das des Vergleichers 15 wird den Eingängen des UND-Gatters 17 (Dioden D3,D4, Widerstand R12) zugeführt. Falls die Regelabweichungsspannung $U_D$ positiver als die Schwellenspannung $U_{SCH}$ und die Dreieckspannung $U_{DS}$ negativer als die Grenzspannung $U_G$ sind, wird der Transistor TR2 geschlossen, wodurch der Kondensator C2 mit der kurzen Zeitkonstante $\tau_K$ über R14 und R22 schnell entladen wird (steile Abstiegsflanke 29 in Fig. 4c). Sobald die Dreieckspannung $U_{DS}$ den Wert der Grenzspannung $U_G$ überschreitet, schaltet das Ausgangssignal des Vergleichers 16 (Operationsverstärker IS4) um, über das UND-Gatter 17 wird der Transistor TR2 geöffnet. Die Entladung des Kondensators C2 erfolgt nunmehr mit der langen Zeitkonstante $\tau_L$ nur über den mittleren Parallelzweig 24 mit dem Widerstand R14. Dadurch zeigt die Dreieckspannung $U_{DS}$ die flache Abstiegsflanke 30 in Fig. 4c.

Gegenüber dem in Fig. 3c dargestellten Verlauf der Dreieckspannung $U_{DS}$ wird die letztere zu einem früheren Zeitpunkt während jeder Netzhalbwelle positiver als die Regelabweichungsspannung, womit am Ausgang 12 des Vergleichers 11 (Operationsverstärker IS2) das Schaltsignal früher erfolgt. Der Triac S wird bezogen auf die Halbwellendauer zu einem früheren Zeitpunkt eingeschaltet. Bezogen auf die Regelabweichung wird also der Heizung 14 ein Mehr an Energie zugeführt. Dieser Überschuß ist abhängig von den gewünschten Regelparametern durch Variation der Grenzspannung einstellbar. Der Phasenanschnittswinkel $\vartheta$ ist bedeutend kleiner, als der Phasenanschnittswinkel $\vartheta'$ bei gleicher Regelabweichungsspannung $U_D'$ bei dem in Fig. 3c gezeigten Verlauf der Dreieckspannung $U_{DS}$.

Es ist darauf hinzuweisen, daß die beschriebene Schaltung in ihren wesentlichen Bauteilen auch auf digitaler Basis oder mit einem Mikroprozessor realisierbar ist.

## Bezugszeichenliste

1 Einstellteil
2 Meßwert-Erfassungsteil
3 Eingang
4 Eingang
5 Umkehraddierer
6 Verzweigungspunkt
7 Netzspannungssynchronisationsteil
8 Integrator
9 Ebtladungsschaltung
10 Ausgang
11 Vergleicher
12 Ausgang
13 Ansteuerschaltung
14 Heizung
15 Vergleicher
16 Vergleicher
17 UND-Gatter
18 Spannungsteiler
19 Ausgang
20 Spannungsteiler
21 Ausgang
22 Basisanschluß
23 Widerstandsnetzwerk
24 Parallelzweig
25 Parallelzweig
26 Parallelzweig
27 Netzhalbwelle
28 Spannungsimpuls
29 Abstiegsflanke
30 Abstiegsflanke

$U_{TH}$ Meßspannung
$U_S$ Sollspannung
$U_D, U_D'$ Regelabweichungsspannung
$U_{DS}$ Dreieckspannung
$U_G$ Grenzspannung
$U_{SCH}$ Schwellenspannung
$U_B$ Versorgungsspannung
$U_H$ Heizspannung

S Triac

$\tau_K$ kurze Zeitkonstante
$\tau_M$ mittlere Zeitkonstante
$\tau_L$ lange Zeitkonstante

$\tau_{LD}$ Ladezeitkonstante

$\vartheta$ Phasenanschnittwinkel

$\vartheta'$ Phasenanschnittwinkel


## Ansprüche

1. Verfahren zur Temperaturregelung insbesondere in Wärme-, Brutschränken, Sterilisatoren oder Wärmebädern mit folgenden Verfahrensschritten:

- In einem Meßwert-Erfassungsteil (2) wird eine für die Ist-Temperatur repräsentative Meßspannung ($U_{TH}$) erzeugt,

- in einem Einstellteil (1) wird eine für die Soll-Temperatur repräsentative Soll-Spannung ($U_S$) erzeugt,

- ein Differenzbildner (Umkehraddierer 5) ermittelt aus Meß- ($U_{TH}$) und Soll-Spannung ($U_S$) eine der Regelabweichung von Soll- zu Ist-Temperatur entsprechende Regelabweichungsspannung ($U_D$),

- in Abhängigkeit der Regelabweichungsspannung ($U_D$) wird die Heizleistung der Heizung (14) der Temperaturregelschaltung mittels Phasenanschnittsteuerung durch Verschiebung des Phasenanschnittwinkels ($\vartheta$) proportional geregelt,

dadurch gekennzeichnet,

daß jeweils während einer jeden Netzhalbwelle (27) die Regelabweichungsspannung ($U_D$) in einem Komparator (Vergleicher 11) mit der Abstiegsflankenspannung einer netzsynchronen Dreiecksspannung ($U_{DS}$) verglichen wird und ab dem Zeitpunkt der Gleichheit dieser beiden Spannungen ($U_D$ bzw. $U_{DS}$) der Komparator (Vergleicher 11) ein Ausgangssignal erzeugt, das die Lage des Phasenanschnittwinkels ($\vartheta$) steuert.

2. Verfahren nach Anspruch 1,
dadurch gekennzeichnet,
daß der zeitliche Verlauf der Dreiecksspannung ($U_{DS}$) in deren Abstiegsflankenbereich in Abhängigkeit von der Regelabweichungsspannung ($U_D$) derart variiert wird, daß mit sinkender Regelabweichungsspannung ($U_D$) der Spannungsabfall der Dreieckspannung ($U_{DS}$) pro Zeiteinheit abnimmt.

3. Verfahren nach Anspruch 1 oder 2,
dadurch gekennzeichnet,
daß unterhalb eines einstellbaren Schwellenwerts (Schwellenspannung $U_{SCH}$) der Regelabweichungsspannung ($U_D$) die Dreiecksspannung ($U_{DS}$) in ihrem Abstiegsflankenbereich einen zeitlichen Verlauf mit

- bis zu einer Grenzspannung ($U_G$) großem Spannungsabfall pro Zeiteinheit (Abstiegsflanke 29) und

- anschließend kleinem Spannungsabfall pro Zeiteinheit (Abstiegsflanke 30) aufweist.

4. Verfahren nach Anspruch 3,
dadurch gekennzeichnet,
daß der Wert der Grenzspannung ($U_G$) einstellbar ist.

5. Schaltung zur Temperaturregelung insbesondere eines Wärme-, Brutschrankes, Sterilisators oder Wärmebades nach dem Verfahren nach einem der vorgenannten Ansprüche mit

- einem Temperatur-Spannungswandler als Meßwert-Erfassungsteil (2),

- einer einstellbaren Spannungsquelle als Einstellteil (1),

- einem Differenzbildner (Umkehraddierer 5) und

- einer proportional mittels Phasenanschnittsteuerung leistungsgeregelten Heizung (14),

dadurch gekennzeichnet,

daß die Ausgänge (6,10) des Differenzbildners (Umkehraddierer 5) zur Erzeugung der Regelabweichungsspannung ($U_D$) und des Dreiecksspannungsgenerators elektrisch mit den Eingängen eines Komparators (Vergleicher 11) verbunden sind, der bei Gleichheit von Dreiecksspannung ($U_{DS}$) und Regelabweichungsspannung ($U_D$) ein Ausgangssignal zur Steuerung der Phasenanschnittsteuerung der Heizung (14) erzeugt.

6. Schaltung nach Anspruch 5,
dadurch gekennzeichnet,
daß der Generator für die netzsynchrone, im Abstiegsverhalten variierbare Dreiecksspannung ($U_{DS}$) im wesentlichen aus einem beim Nulldurchgang der Netzhalbwelle (27) mit kurzer Zeitkonstante ($\tau_{LD}$) aufladbaren und während der verbleibenden Netzhalbperiode über eine Entladungsschaltung (9) mit mittlerer Zeitkonstante ($\tau_M$) bzw. nach Erreichen des Schwellenwertes (Schwellenspannung $U_{SCH}$) der Regelabweichungsspannung ($U_D$) bis zum Erreichen der Grenzspannung ($U_G$) mit kurzer Zeitkonstante ($\tau_K$) und danach mit langer Zeitkonstante ($\tau_L$) entladbaren Kondensator (C2) besteht.

7. Schaltung nach Anspruch 6,
dadurch gekennzeichnet,
daß die Entladungsschaltung (9) für den Kondensator (C2) aus einem von einer Logikschaltung beschaltbaren, mit Parallelzweigen (24,25,26) mit unterschiedlichen, die verschiedenen Zeitkonstanten ($\tau_M$, $\tau_K$, $\tau_L$) definierenden Widerständen (R14,R15,R22,R23) versehenen Widerstandsnetzwerk (23) besteht, wobei die Logikschaltung aus

- einem ersten, die Schwellenspannung ($U_{SCH}$) mit der Regelabweichungsspannung ($U_D$) vergleichen den Komparator (Vergleicher 15),

- einem zweiten, die Grenzspannung ($U_G$) mit der Kondensatorspannung (Dreieckspannung $U_{DS}$) vergleichenden Komparator (Vergleicher 16) und

- einem eingangsseitig mit den Ausgängen (19,21) der Komparatoren (Vergleicher 15,16) verbundenen UND-Gatter (17) besteht.

8. Schaltung nach Anspruch 6 und 7,
dadurch gekennzeichnet,
daß über die Ausgänge des ersten Komparators (Vergleicher 15) bzw. des UND-Gatters (17) die Parallelzweige (24,25,26) des Widerstandsnetzwerkes gegebenenfalls mittels elektronischer Schalter (Transistor TR2,TR3) selektiv ein- und ausschaltbar sind.

9. Schalter nach Anspruch 7 oder 8,
dadurch gekennzeichnet,
daß das Widerstandsnetzwerk (23) aus drei Parallelzweigen (24,25,26) besteht, von denen

- ein zentraler Zweig (24) mit seinem Widerstand (R14) ständig mit dem Entladepotential (negative Betriebsspannung $-U_B$) verbunden ist, womit die lange Zeitkonstante ($\tau_L$) der Entladungsschaltung (9) definiert ist,

- ein zweiter Zweig (26) mit seinem Widerstand (R15,R23) über einen elektronischen Schalter (TR3) vom Ausgangssignal des ersten Komparators (Vergleicher 15) gesteuert parallel zum zentralen Zweig (24) zuschaltbar ist, womit die mittlere Zeitkonstante ($\tau_M$) der Entladungsschaltung (9) definiert ist und

- ein dritter Zweig (25) mit seinem Widerstand (R22) über einen elektronischen Schalter (TR2) vom Ausgangssignal des UND-Gatters (17) gesteuert parallel zum zentralen Zweig (24) zuschaltbar ist, womit die kurze Zeitkonstante ($\tau_K$) der Entladungsschaltung (9) definiert ist.

FIG. 1

Netz — 14 — S — Netz

13 Anpass-schaltung

12 — 11 Vergleicher

9 Entladungs-schaltung

6 — 18 — 20 — 10

5 Umkehr-addierer

15 Vergleicher

16 Vergleicher

17 UND

19 — 21

Integrator — 8

2 IST-Wert-Erfassung

1 Sollwert-vorgabe

7 Netzspannungs-synchronisation

3 — 4

FIG.2

EP 0 293 853 A1

FIG.3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 215 589 (ELECTRICITE ELECTRONIQUE SARL) * Seite 1, Zeile 13 - Seite 3, Zeile 23; Figuren 1-3 * --- | 1,5 | G 05 D 23/24 |
| A | GB-A-2 124 411 (TOKYO SHIBAURA DENKI K.K.) * Spalte 1, Zeile 41 - Seite 2, Zeile 51; Figuren 1-8; Zusammenfassung * --- | 1,5 | |
| A | US-A-4 093 847 (J.A. WALKER et al.) * Spalte 8, Zeile 7 - Spalte 11, Zeile 62; Figuren 5,6; Zusammenfassung * --- | 1,5 | |
| A | FR-A-1 387 830 (ETS R. AUCEJO) * Seite 1, Zeile 14 - Seite 2, Zeile 4; Figur 3 * ----- | 1 | |

RECHERCHIERTE SACHGEBIETE (Int. Cl.4)

G 05 D

Der vorliegende Recherchenbericht wurde für alle Patentansprüche erstellt

| Recherchenort | Abschlußdatum der Recherche | Prüfer |
|---|---|---|
| DEN HAAG | 27-07-1988 | FOURRICHON,P.M.L. |